(19) Europäisches Patentamt
European Patent Office
Office européen des brevets

(11) **EP 0 983 154 B1**

(12) **EUROPÄISCHE PATENTSCHRIFT**

(45) Veröffentlichungstag und Bekanntmachung des Hinweises auf die Patenterteilung:
**28.04.2004 Patentblatt 2004/18**

(21) Anmeldenummer: **98928292.6**

(22) Anmeldetag: **19.05.1998**

(51) Int Cl.$^7$: **B60C 23/06**

(86) Internationale Anmeldenummer:
**PCT/EP1998/002937**

(87) Internationale Veröffentlichungsnummer:
**WO 1998/052780 (26.11.1998 Gazette 1998/48)**

(54) **VERFAHREN ZUR ERKENNUNG VON DRUCKVERLUSTEN IN FAHRZEUGREIFEN**

METHOD FOR DETECTING PRESSURE LOSS IN VEHICULE TYRES

PROCEDE POUR DETECTER LES PERTES DE PRESSION DES PNEUMATIQUES DES VEHICULES

(84) Benannte Vertragsstaaten:
**DE FR GB**

(30) Priorität: **23.05.1997 DE 19721480**

(43) Veröffentlichungstag der Anmeldung:
**08.03.2000 Patentblatt 2000/10**

(73) Patentinhaber: **Continental Teves AG & Co. OHG
60488 Frankfurt am Main (DE)**

(72) Erfinder:
• **LATARNIK, Michael
D-61381 Friedrichsdorf (DE)**
• **ZENZEN, Markus
D-40723 Hilden (DE)**
• **GRIESSER, Martin
D-65760 Eschborn (DE)**

(56) Entgegenhaltungen:
**EP-A- 0 489 563     EP-A- 0 512 745
EP-A- 0 636 503     EP-A- 0 656 268
WO-A-95/12498        US-A- 4 876 528
US-A- 5 192 929**

**Beschreibung**

Die Erfindung betrifft ein Verfahren zur Erkennung von Druckverlusten in Fahrzeugreifen, wobei aus Signalen, die die Raddrehzahlen mehrerer Fahrzeugräder repräsentieren, ein Referenzwert gebildet wird, wobei aus einem Vergleich eines aktuell bestimmten Referenzwertes mit wenigstens einem Vergleichswert auf einen Druckverlust geschlossen wird, wenn der aktuell bestimmte Referenzwert den Vergleichswert über- bzw. unterschreitet.

Aus der vorveröffentlichten Anmeldung mit der Nummer WO 95/12498 ist es bekannt, zu den einzelnen Rädern eines Fahrzeuges während einer ersten Phase Korrekturfaktoren zu lernen, die eventuelle Unterschiede im Durchmesser der einzelnen Räder ausgleichen sollen. Im laufenden Betrieb werden dann die ermittelten Raddrehzahlen mit den jeweiligen gelernten Korrekturfaktoren multipliziert, um aus der Raddrehgeschwindigkeit die Fahrzeuggeschwindigkeit zu ermitteln. Dabei sollen auch die Korrekturfaktoren während der Fahrt aktuell bestimmt werden. Wenn der aktuell bestimmte Korrekturfaktor von dem für dieses Rad in der Lernphase ermittelten Korrekturfaktor um mehr als einen bestimmten Schwellwert abweicht, wird ein Druckverlust in dem Fahrzeugreifen erkannt. Die Korrekturfaktoren werden dabei fahrsituationsabhängig erfaßt, so daß die Effekte eventueller Räddrehzahlabweichungen wegen einer Längs- oder Querbeschleunigung, wegen einer Kurvenfahrt und des damit eventuell verbundenen Über- oder Untersteuerns des Fahrzeuges oder wegen unterschiedlicher Schlupfwerte aufgrund unterschiedlicher Reibbeiwerte auf der linken und rechten Fahrbahnseite berücksichtigt werden.

Weiterhin ist es aus der US-PS 4,876,528 und aus der US-PS 5,192,929 bekannt, einen Druckverlust von Reifen eines Fahrzeuges zu erkennen, indem die Drehgeschwindigkeiten der diagonalen Räder summiert werden und indem die Differenz dieser Summen ermittelt wird. Wenn diese Differenz zwischen 0,05% und 0,6% des Mittelwertes beider Summen liegt, darf die Drehgeschwindigkeit jedes einzelnen Rades höchstens um 0,1% von der mittleren Geschwindigkeit aller vier Räder abweichen. Bei einer größeren Abweichung wird ein Druckverlust signalisiert. Dabei wird eine Überwachung des Druckverlustes nur dann vorgenommen, wenn sich das Fahrzeug zumindest annähernd in Geradeausfahrt befindet. Andernfalls weist die Differenz einen zu großen Wert auf wegen eines möglicherweise unter- oder übersteuernden Verhaltens des Fahrzeuges bei einer Kurvenfahrt.

Aus der EP-A-0 656 268 geht ein Druckverlusterkennungsverfahren gemäß dem Oberbegriff des Anspruchs 1 hervor, bei dem aus Raddrehzahlinformationen Referenzwerte dF = (F1 + F4) / (F2 + F3) gebildet werden. Ein Druckverlust wird erkannt, wenn der Wert dF einen vorgegebenen Bereich um die Zahl Eins über- bzw. unterschreitet. In die Berechnung von dF geht nicht die Zeit zwischen zwei gemessenen Impulsflanken der Raddrehzahlsensoren ein, sondern die Umdrehungsgeschwindigkeit der Räder.

Es ist demgegenüber die Aufgabe der vorliegenden Erfindung, ein Verfahren anzugeben, mit dem ein Druckverlust in einem Reifen auf möglichst einfache und dennoch möglichst sichere Weise festgestellt werden kann.

Erfindungsgemäß wird diese Aufgabe nach einem Verfahren gemäß Anspruch 1, gelöst. Weitere Ausgestaltungen der Erfindung sind in den Unteransprüchen enthalten.

Die Referenzwerte können beispielsweise folgendermaßen gebildet werden:

$$Ref1 = ( T_{vl} + T_{hr} ) / ( T_{vr} + T_{hl} )$$

$$Ref2 = ( T_{vl} + T_{vr} ) / ( T_{hr} + T_{hl} )$$

$$Ref3 = ( T_{vl} + T_{hl} ) / ( T_{vr} + T_{hr} ).$$

Die Größe $T_i$ ist das die Drehzahl des Rades repräsentierende Signal, wobei die Indizes i die folgende Bedeutung haben: vl = vorne links, vr = vorne rechts, hl = hinten links, hr = hinten rechts und beziehen sich dabei auf das jeweilige Rad. Besonders vorteilhaft kann hierbei die Größe $T_i$ als das die Drehzahl des Rades repräsentierende Signal mit der Ausgestaltung des Verfahrens nach Anspruch 2 ermittelt werden.

Vorteilhaft werden mit dem erfindungsgemäßen Verfahren nach Anspruch 1 numerische Probleme bei der Bestimmung der Referenzwerte minimiert. Nach dem Stand der Technik werden zunächst jeweils zwei Größen summiert, die nahezu denselben Wert haben. Unterschiede treten also erst in einigen Stellen nach dem Komma auf, woraus schon erste Probleme resultieren können. In einem weiteren Schritt wird bei dem Stand der Technik die Differenz dieser beiden Summen gebildet. Wie ausgeführt haben auch die beiden Summen ziemlich genau denselben Wert. Abweichungen dieser beiden Summen sind jedenfalls schon mit einer Ungenauigkeit behaftet. Wenn im weiteren von diesen beiden Größen die Differenz gebildet wird, nehmen eventuelle Ungenauigkeiten nochmals deutlich zu, so daß die ermittelte Differenz unter Umständen schon als Zahlenwert nicht mehr verwertbar ist.

Es ist außerdem bekannt, durch die Referenzwerte die Summen jeweils zweier die Raddrehzahlen repräsentierender Signale zu bilden, wobei jeweils zwei dieser Summen dividiert werden. Die numerischen Probleme werden dabei vorteilhaft minimiert, weil es mit dem erfindungsgemäßen Verfahren nicht mehr notwendig ist, in nachfolgenden Schritten zwei jeweils nahezu gleich große Größen zu summieren und dann die Summen zu subtrahieren.

Bei dem Verfahren nach der Erfindung werden die die Raddrehzahlen der einzelnen Fahrzeugräder repräsentierenden Signale gewonnen, indem die Zeitmessung der einzelnen Räder nach einem gemeinsamen Startsignal individuell mit der jeweils folgenden Flanke des betreffenden Rades repräsentierenden Signals gestartet und individuell für jedes Rad nach Ablauf einer für alle Räder vorgegebenen ganzen oder teilweisen Anzahl von Radumdrehungen abgeschlossen wird. Bei Systemen, welche lediglich die Anzahl der Flanken und die Zeit der letzten Flanke pro Abtastintervall zur Verfügung stellen, wird vorteilhafterweise auf die entsprechende Flanke interpoliert, welche dem Ende der Meßstrecke entspricht.

Gegenüber der Vorgehensweise zur Bestimmung der Raddrehzahl, bei der beobachtet wird, wieviele Flanken in einem vorgegebenen Zeitfenster durchlaufen, können weitere Ungenauigkeiten vermieden werden. Bei dieser genannten Vorgehensweise besteht nämlich am Anfang wie auch am Ende des Zeitfensters eine Ungenauigkeit, in welcher Postion sich das Sensorrad bezogen auf den letzten Flankendurchlauf befindet. Es kann nämlich sein, daß der letzte Flankendurchlauf gerade stattgefunden hat oder daß der letzte Flankendurchlauf so lang her ist, daß der nächste Flankendurchlauf unmittelbar bevorsteht. Dies hängt also davon ab, in welcher Position sich das Sensorrad in dem Zwischenraum zwischen zwei Zähnen des Sensorrades gegenüber dem Sensor befindet.

Mit dem erfindungsgemäßen Verfahren wird diese Ungenauigkeit vorteilhaft minimiert, indem die Stellung des Sensorrades zum Sensor am Beginn wie auch am Ende der Messung exakt feststeht. Bei einem Sensorrad mit 48 Zähnen macht dies am Beginn und am Ende der Messung jeweils eine 1/48-tel Umdrehung aus.

Bei dem Verfahren nach der Erfindung wird die Anzahl der Radumdrehungen in Abhängigkeit von der Fahrzeuggeschwindigkeit vorgegeben.

Dies kann beispielsweise so erfolgen, daß sich die Anzahl der Radumdrehungen proportional mit der Fahrzeuggeschwindigkeit ändert. Dadurch kann beispielsweise erreicht werden, daß die Meßzeit, über die das die Raddrehzahl repräsentierende Signal ermittelt werden soll, annähernd konstant gehalten wird.

Die Anzahl der Radumdrehungen kann dabei ganzzahlig sein. Ebenso ist es auch möglich, eine nicht ganzzahlige Anzahl von Radumdrehungen vorzugeben. Die Messung endet dann mit der Flanke eines anderen Zahnes als des Zahnes, mit dem die Messung begonnen wurde. Um die Messung exakt mit einer Flanke beginnen und exakt mit der Flanke eines anderen Zahnes beenden zu können, ist es notwendig, den Teil der Umdrehungen, der nicht mehr vollendet wird, entsprechend der Zahl der Zähne des Sensorrades festzulegen.

Weitere Ausgestaltungen dieser Vorgehensweise können darin bestehen, daß bei Sensoren mit Abtastintervallen, die so bemessen sind, daß nicht zu jeder Flanke die Zeitinformation erfaßt wird, sondern bei denen mit einzelnen Flanken Abtastintervalle geöffnet und geschlossen werden, zu denen jeweils die Anzahl der darin befindlichen Flanken sowie die Anfangsund Endzeit des Abtastintervalles gespeichert wird, gegebenenfalls eine Interpolation auf die bestimmte Flanke erfolgt, wenn diese nicht gerade das Ende eine Abtastintervalles markiert. Die Interpolation kann beispielsweise unter der Annahme einer konstanten Geschwindigkeit in dem Abtastintervall erfolgen.

Die Messung kann dabei für jedes Rad einzeln erfolgen. Es wird ein allgemeines Startsignale ausgegeben. Nach diesem Startsignal wird für jedes Rad einzeln die Messung gestartet, wenn die entsprechende Flanke des Zahnes des Sensorrades erkannt worden ist. Eine bestimmte Flanke eines Zahnes kann beispielsweise erkannt werden, weil an dem Sensorrad an einer Stelle eine Zahnlücke vorgesehen ist, um die absolute Winkelposition des Sensorrades erkennen zu können. Damit können ausgehend von dieser Lücke die erkannten Zähne "mitgezählt" und so einzeln erkannt werden. ES ist aber auch möglich, eventuell andere Vorgehensweisen zur Erkennung und Zuordnung der einzelnen Zähne des Sensorrades vorzusehen.

Bei dem Verfahren nach der Erfindung ist der wenigstens eine Vergleichswert vorgebbar, indem zu dem Mittelwert des Referenzwertes ein Offset addiert bzw. subtrahiert wird, wenn ein Gütemaß der Streuung der Mittelwerte einen bestimmten Wert nicht überschreitet und/oder wenn die ermittelten Maximal- und Minimalwerte der Referenzwerte um nicht mehr als einen bestimmten Wert von dem Mittelwert der Referenzwerte abweichen.

Vorteilhaft werden dabei die Vergleichswerte festgelegt, wenn anhand der ermittelten Daten feststeht, daß nur geringe Schwankungen der Referenzwerte auftreten. Im Idealfall sind die Referenzwerte bei einer unbeschleunigten Geradeausfahrt gleich 1. Es kann also auch noch überprüft werden, ob die Referenzwerte nicht um mehr als eine bestimmte Schwelle von dem Wert 1 abweichen.

Das Gütemaß für die Streuung kann aus den gefilterten und ungefilterten Werten berechnet werden und beispielsweise die Standardabweichung sein.

Indem dabei zum einen die gefilterten Werte einzeln berücksichtigt werden, können einzelne oder mehrere Meßwerte der Drehgeschwindigkeit mit starker Abweichung erkannt werden, die vergleichsweise sicher nicht auf ein Rauschen des Meßaufnehmers zurückzuführen sind, da die Effekte des Rauschens durch die Tiefpaßfilterung herausgefiltert worden sind. Vorteilhafterweise handelt es sich dabei um ein Tiefpaßfilter 1. Ordnung. Durch das Erkennen dieser starken Abweichungen wird von der Bildung eines Vergleichswertes abgesehen, wenn bei den Werten, aus denen der Vergleichswert gebildet werden soll, zu große Differenzen vorliegen. Dadurch wird vorteilhaft die Bildung eines Vergleichswertes unterdrückt, wenn durch die Fahrbedingungen verursacht die Raddrehzahlen der Räder unterschiedliche Werte aufweisen, wie dies beispielsweise bei einer Kurvenfahrt der Fall sein kann.

Durch die Berücksichtigung der ungefilterten Werte - vorteilhafter Weise durch ein Zusammenfassen mehrerer Werte zu einem Mittelwert und eine Bestimmung eines Gütemaßes, z. B. der Standardabweichung, - kann bestimmt werden, inwieweit sich die Raddrehzahlen über die Zeitspanne geändert haben, während der die Aufnahme der Meßwerte erfolgte.

Bei dem Verfahren nach Anspruch 3 wird ein erster Satz von Meßwerten und ein zweiter Satz von Meßwerten gebildet, wobei Vergleichswerte in Abhängigkeit von dem Maximalwert und dem Minimalwert der Referenzwerte gebildet werden, wenn bei den beiden Sätzen von Meßwerten die Maximalwerte der Referenzwerte, die Minimalwerte der Referenzwerte und das jeweilige arithmetische Mittel der Referenzwerte der beiden Sätze um nicht mehr als jeweils vorgegebene bestimmte Beträge voneinander abweichen und das Gütemaß der Streuung einen bestimmten Wert nicht überschreitet.

Dieses Verfahren wird vorteilhaft dann eingesetzt, wenn sich dauerhaft so starke Schwankungen einstellen, daß eine Festlegung der Vergleichswerte nicht möglich ist. Mit dem Verfahren nach Anspruch 3 erfolgt eine Adaption der Vergleichswerte an das Ausmaß der Schwankungen der Referenzwerte. Mit anderen Worten wird mittels des Verfahren nach Anspruch 3 geprüft, ob die Schwankungen der Referenzwerte auf einem erhöhten Niveau dennoch stabil sind. Die Vergleichswerte werden dann in Abhängigkeit von den Schwankungen festgelegt.

Damit können also die Genauigkeitsanforderungen schrittweise an die Fertigungstoleranzen und Abweichungen aufgrund der Fahrbedingungen angepaßt werden. Der Wert des Offsets kann dabei 0,5 Promille betragen. Der vorgegebene Betrag kann dabei in der Größenordnung von 0,1 Promille liegen, der weitere vorgegebene Betrag ebenfalls in der Größenordnung von 0,1 Promille. Das Mehrfache des Gütemaßes kann dabei vorteilhaft das Vierfache des Gütemaßes sein.

Wenn solcherart ein oberer und unterer Grenzwert festgelegt ist, wird die Kontrolle auf Druckverluste mittels dieser Werte vorgenommen. Der obere und untere Grenzwert werden dann beibehalten bis ein Reset dieser Werte erfolgt.

Wenn bei dem zweiten Satz von Meßwerten noch keine Festlegung der Vergleichswerte gelungen ist, wird dieses Verfahren wiederholt, wobei im nächsten Versuch die entsprechenden Werte des zweiten Satzes von Meßwerten zum Vergleich herangezogen werden.

Bei dem Verfahren nach Anspruch 4 werden die Vergleichswerte achsenabhängig festgelegt.

Dies erweist sich besonders bei der Verwendung des Referenzwertes Ref2 allein oder in Kombination als vorteilhaft. Wenn Druckverluste an den beiden Achsen erkannt werden sollen. können für die jeweils interessierende Achse Modifikationen der Druckverlustschranken zugelassen werden. Bei den Rädern der angetriebenen Achse führt ein Druckverlust zu einer geringeren Abweichung in der Raddrehzahl als bei den Rädern der nicht angetriebenen Achse. Infolgedessen wird bei den Rädern der angetriebenen Achse, die Schranke, ab der ein Druckverlust erkannt wird, geringer angesetzt als bei den Rädern der nicht angetriebenen Achse.

Bei dem Verfahren nach Anspruch 5 werden die Vergleichswerte geschwindigkeitsabhängig festgelegt.

Es hat sich dabei als vorteilhaft erwiesen, beispielsweise in Schritten von 30 km/h bis 50 km/h Vergleichswerte als Stützstellen festzulegen. Im laufenden Betrieb kann dann beispielsweise der Vergleichswert verwendet werden, dessen Geschwindigkeit der aktuellen Geschwindigkeit am nächsten liegt oder es kann auch zwischen zwei Vergleichswerten der nächstkleineren und der nächstgrößeren Geschwindigkeit interpoliert werden.

Bei dem Verfahren nach Anspruch 6 werden bei einer Unterbrechung der Fahrt die ermittelten Werte gespeichert und nach Wiederantritt der Fahrt wieder ausgelesen.

Dabei erweist es sich als vorteilhaft, daß auch ein schleichender Druckverlust bei stehendem Fahrzeug unmittelbar nach Wiederantritt der Fahrt erkannt werden kann. Außerdem steht die Information über den Luftdruck in den Fahrzeugreifen sofort bei Wiederantritt der Fahrt zur Verfügung. Die gespeicherten Werte sind dabei zumindest die Vergleichswerte.

Bei dem Verfahren nach Anspruch 7 wird bei einem Radwechsel eine Resettaste betätigt.

Bei einem Radwechsel ist der Luftdruck im Reifen gegenüber dem vorher montierten Rad durchweg anders. Vorteilhaft werden also die Vergleichswerte neu festgelegt, wenn ein Radwechsel erfolgt ist.

Gegebenenfalls kann dies auch erfolgen, wenn der Luftdruck in dem Reifen überprüft wurde, was durch ein Abnehmen der Schutzkappe des Ventiles erkannt werden kann.

Bei dem Verfahren nach Anspruch 8 ist eine manuell betätigbare Resettaste vorgesehen.

Dadurch kann auch eine neue Festlegung der Vergleichswerte durch den Fahrzeugführer veranlaßt werden, wenn beispielsweise der Luftdruck der Reifen kontrolliert und entsprechend nachgefüllt wurde. Dadurch kann der Aufwand hinsichtlich Schaltern oder Sensoren verringert werden. Es obliegt dann dem Benutzer des Fahrzeuges, für eine Initialisierung zu sorgen, wenn ein Rad gewechselt wurde oder wenn Luft nachgefüllt wurde.

Bei dem Verfahren nach Anspruch 9 wird die Bildung der Referenzwerte unterbrochen, wenn bestimmte Schwellwerte der Längsbeschleunigung, Querbeschleunigung und/oder Radbeschleunigung überschritten werden.

Mittels dieser Größen läßt sich eine Prüfung vornehmen, ob die Raddrehzahlsignale starke Abweichungen zeigen, die auf die Fahrbedingungen zurückzuführen sind, wie beispielsweise eine Kurvenfahrt, bei der zumindest die Raddrehzahlen der kurvenäußeren Räder von den Raddrehzahlen der kurveninneren Räder abweichen. Wenn das Fahrzeug zudem ein über- oder untersteuerndes Kurvenfahrverhalten zeigt, kommt es bei einer Kurvenfahrt auch zu dadurch bedingten Abweichungen der Drehzahlen der Räder der Vorder- und Hinterachse. Aus der Längsbeschleunigung läßt sich ableiten, ob mit Abweichungen der Drehzahlen der angetriebenen Räder von den Drehzahlen der nicht angetriebenen Räder zu rechnen ist, die auf einen Beschleunigungsvorgang zurückzuführen sind. Aus der Radbeschleunigung läßt sich ablesen, ob das Fahrzeug gegebenenfalls durch ein Schlagloch gefahren ist, so daß einzelne Räder frei drehen und sich deswegen eine Abweichung der Drehzahl dieser Räder einstellt. Es ist vorteilhaft, in allen diesen Fällen die Meßwertaufnahme zu unterbrechen.

Bei dem Verfahren nach Anspruch 10 wird die Bildung der Referenzwerte unterbrochen, wenn ein Bremseneingriff erfolgt.

Dadurch wird die Erfassung der Werte unterbrochen, wenn es durch den Bremsschlupf zu unterschiedlichen Raddrehzahlen der Räder kommt, die auf den Bremsvorgang zurückgeführt werden müssen. Ein Bremseneingriff kann beispielsweise erkannt werden, wenn ein ABS-System anspricht oder wenn bei einem Antriebsschlupfsystem ein aktiver Bremseneingriff erfolgt. Ebenso kann dies vom Bremslichtschalter abgeleitet werden, der auch bereits bei Bremsungen anspricht, bei denen der Radschlupf deutlich geringer ist.

Vorteilhaft zeigt sich also bei dem erfindungsgemäßen Verfahren, daß nur dann ein oder mehrere Vergleichswerte bestimmt werden, wenn aus den ermittelten Meßwerten ableitbar ist, daß dies auch sinnvoll ist. Gegenüber dem anderen bekannten Verfahren, bei dem der Vergleichswert laufend neu ermittelt bzw. gegebenenfalls verworfen wird, ergibt sich als Vorteil, daß Raddrehzahlen, die aufgrund veränderten Reifendrukkes bereits verfälscht sind, nicht mehr in den Vergleichswert einbezogen werden. Indem bei diesen bekannten Verfahren auch die Drehzahlen der Räder, die bereits einen Druckverlust erlitten haben, in die Bildung des Vergleichswertes mit einbezogen werden, beeinflußt also die fehlerhafte Raddrehzahl den Vergleichswert, durch den dieses Rad gerade als fehlerhaft erkannt werden soll. Bei den bekannten Verfahren wird also der Vergleichswert fortlaufend neu bestimmt, so daß fehlerbehaftete Raddrehzahlen auch zu einem fehlerbehafteten Vergleichswert führen. Die Erkennung von Druckverlusten ist nur zeitverzögert möglich. Demgegenüber werden bei dem vorliegenden Verfahren Referenzwerte mit vorab ermittelten Vergleichswerten verglichen, so daß verzögerungsfrei ein Druckverlust erkannt werden kann.

Wenn ein Druckverlust erkannt wurde, kann ein optisches und/oder akustisches Warnsignal ausgegeben werden.

Ein Ausführungsbeispiel der Erfindung ist in der Zeichnung näher dargestellt. Es zeigt dabei im einzelnen:

Fig. 1: einen Ablauf eines Verfahrens zum Ermitteln der Vergleichswerte,

Fig. 2: einen Ablauf eines Verfahrens zum Ermitteln der Vergleichswerte,

Fig. 3: die Rücksetzung der ermittelten Werte.

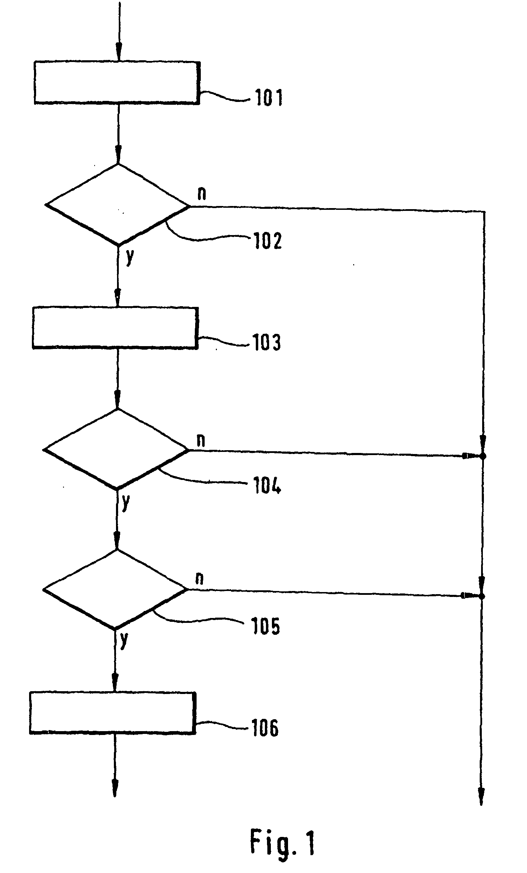

Wie in Fig. 1 dargestellt, werden in dem Schritt 101 zunächst die Raddrehzahlsignale der einzelnen Räder aufgenommen.

In dem Schritt 102 kann dann überprüft werden, ob keine Fahrbedingung vorliegt, die ein Bilden der Referenzwerte als nicht sinnvoll erscheinen läßt. Eine solche Fahrbedingung kann beispielsweise darin bestehen, daß die Längsbeschleunigung des Fahrzeuges, die Querbeschleunigung des Fahrzeuges und/oder die Radbeschleunigung mindestens eines Rades des Fahrzeuges bestimmte Schwellwerte überschreiten.

Ebenso kann eine solche Fahrbedingung darin bestehen, daß ein Bremseneingriff erfolgt. Dies kann beispielsweise durch ein Ansprechen eines Antiblokkiersystems, einer Antriebsschlupfregelung mit Bremseneingriff und/oder durch ein Auswerten des Bremslichtschalters erkannt werden. Ebenso kann dies bei einer Erkennung von Systemstörungen wie beispielsweise Sensorfehlern vorgenommen werden.

Wenn erkannt wurde, daß eine solche Fahrdingung vorliegt, wird der aktuelle Durchlauf des Verfahrens beendet.

Andernfalls erfolgt ein Übergang zu dem Schritt 103, in dem aus den gemessenen Zeiten wenigstens ein Referenzwert Ref1, Ref2, Ref3 gebildet wird. Die Referenzwerte können beispielsweise folgendermaßen gebildet werden:

$$Ref1 = ( T_{vl} + T_{hr} ) / ( T_{vr} + T_{hl} )$$

$$Ref2 = ( T_{vl} + T_{vr} ) / ( T_{hr} + T_{hl} )$$

$$Ref3 = ( T_{vl} + T_{hl} ) / ( T_{vr} + T_{hr} ).$$

Die Größe T ist dabei das die Drehzahl des Rades repräsentierende Signal, die Indices haben die folgende Bedeutung: vl = vorne links, vr = vorne rechts, hl = hinten links, hr = hinten rechts und beziehen sich dabei auf das jeweilige Rad. Als das die Drehzahl reprsäsentierende Signal kann vorteilhaft die Zeitdauer verwendet werden, welche für eine vorgegebene Anzahl von Radumdrehungen benötigt wurde.

Für das weitere Verfahren kann einer oder mehrere dieser Referenzwerte in Kombination verwendet werden.

Das die Drehzahl des Rades repräsentierende Signal wird vorteilhaft mit verbesserter Genauigkeit mit Hilfe einer Zeitmessung entsprechend der Darstellung gemäß Ansprüchen 2 und 3 sowie zugehöriger Beschreibung in der Beschreibungseinleitung gewonnen. Von einer Wiederholung dieser Bestandteile der Anmeldung wird hier abgesehen, weil durch diesen Verweis die Vorgehensweise hinreichend deutlich beschrieben ist.

Es wird dabei jeweils ein ungefilterter Wert ermittelt und ein Wert, der einer Tiefpaßfilterung unterzogen wurde. Dabei handelt es sich vorteilhaft um ein Tiefpaßfilter 1. Ordnung.

Weiterhin wird in diesem Schritt 103 überprüft, ob der aktuell ermittelte gefilterte Referenzwert größer ist als der bisher ermittelte Maximalwert der gefilterten Referenzwerte. Wenn dies der Fall ist, wird der aktuell ermittelte gefilterte Referenzwert als Maximalwert der gefilterten Referenzwerte gespeichert.

Ebenso wird in diesem Schritt 103 überprüft, ob der aktuell ermittelte gefilterte Referenzwert kleiner ist als der bisher ermittelte Minimalwert der gefilterten Referenzwerte. Wenn dies der Fall ist, wird der aktuell ermittelte gefilterte Referenzwert als Minimalwert der gefilterten Referenzwerte gespeichert.

In diesem Schritt 103 wird aus dem ungefilterten Referenzwert fortlaufend der Mittelwert der ungefilterten Referenzwerte sowie die dazu gehörende Gütemaß ermittelt.

Es erfolgt dann ein Übergang zu dem Schritt 104, in dem überprüft wird, ob bereits eine bestimmte Zahl von Referenzwerten ermittelt wurde.

Ist dies nicht der Fall, wird das Verfahren zunächst beendet bis bei weiteren Durchläufen des Verfahrens eine Zahl von Referenzwerten ermittelt wurde, die der bestimmten Zahl entspricht.

Wenn in dem Schritt 104 festgestellt wurde, daß bereits eine bestimmte Zahl von Referenzwerten ermittelt wurde, erfolgt ein Übergang zu dem Schritt 105.

In diesem Schritt 105 wird überprüft, ob die Differenz der in dem Schritt 103 ermittelten Maximalwerte und Minimalwerte der gefilterten Referenzwerte kleiner ist als ein erster Schwellwert. Weiterhin wird überprüft ob das Gütemaß der ungefilterten Referenzwerte kleiner ist als ein zweiter Schwellwert.

Ist dies nicht der Fall, werden die entsprechenden Werte gelöscht (Mittelwert, Gütemaß, Maximalwert und Minimalwert). Wenn die Abweichung zu groß war, kann dies an ungünstigen Fahrbedingungen (Beschleunigungen, Kurvenfahrt) gelegen haben. Es wird dann weiterhin versucht, Referenzwerte zu ermitteln, bei denen die entsprechenden Bedingungen für die Festlegung eines Vergleichswertes erfüllt sind.

Wenn die Überprüfung in dem Schritt 105 erfolgreich war, erfolgt ein Übergang zu dem Schritt 106, in dem Vergleichswerte ermittelt werden durch Mittelung der Referenzwerte und Addition bzw. Subtraktion eines Offsets.

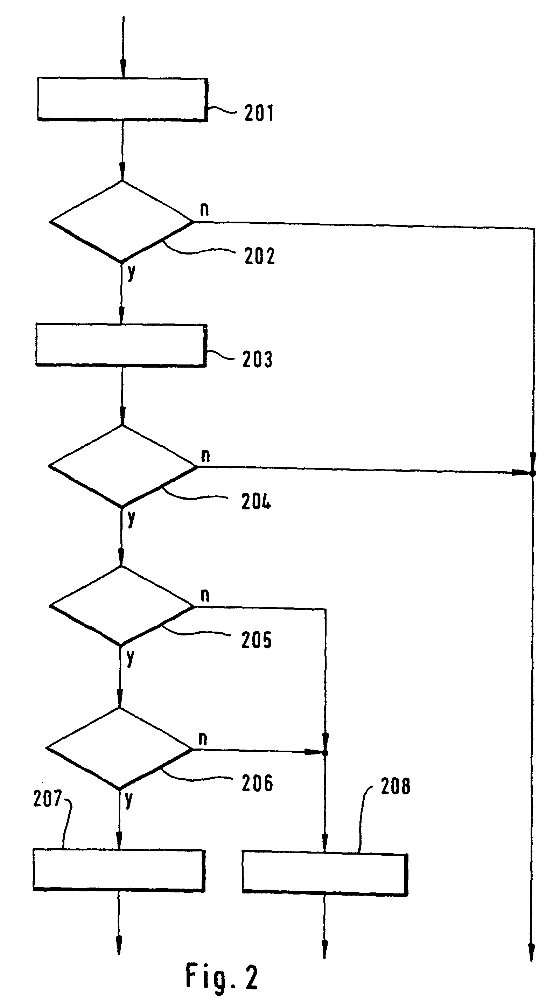

Figur 2 zeigt einen Ablauf eines Verfahrens zum Ermitteln der Vergleichswerte. Die ersten Schritte in diesem Verfahren sind dabei identisch zu den Schritten der Figur 1.

In dem Schritt 201 werden zunächst die Raddrehzahlsignale der einzelnen Räder aufgenommen.

In dem Schritt 202 kann dann überprüft werden, ob keine Fahrbedingung vorliegt, die ein Bilden der Referenzwerte als nicht sinnvoll erscheinen läßt. Eine solche Fahrbedingung kann beispielsweise darin bestehen, daß die Längsbeschleunigung des Fahrzeuges, die Querbeschleunigung des Fahrzeuges und/oder die Radbeschleunigung mindestens eines Rades des Fahrzeuges bestimmte Schwellwerte überschreiten.

Ebenso kann eine solche Fahrbedingung darin bestehen, daß ein Bremseneingriff erfolgt. Dies kann beispielsweise durch ein Ansprechen eines Antiblokkiersystems, einer Antriebsschlupfregelung mit Bremseneingriff und/oder durch ein Auswerten des Bremslichtschalters erkannt werden.

Wenn erkannt wurde, daß eine solche Fahrbedingung vorliegt, wird der aktuelle Durchlauf des Verfahrens beendet.

Andernfalls erfolgt ein Übergang zu dem Schritt 203, in dem aus den gemessenen Raddrehzahlen wenigstens ein Referenzwert Ref1, Ref2, Ref3 gebildet wird. Die Referenzwerte können beispielsweise folgendermaßen gebildet werden:

$$Ref1 = ( T_{vl} + T_{hr} ) / ( T_{vr} + T_{hl} )$$

$$Ref2 = ( T_{vl} + T_{vr} ) / ( T_{hr} + T_{hl} )$$

$$Ref3 = ( T_{vl} + T_{hl} ) / ( T_{vr} + T_{hr} ).$$

Die Größe T ist dabei das die Drehzahl des Rades repräsentierende Signal, die Indizes haben die folgende Bedeutung: vl = vorne links, vr = vorne rechts, hl = hinten links, hr = hinten rechts und beziehen sich dabei auf das jeweilige Rad.

Für das weitere Verfahren kann einer oder mehrere dieser Referenzwerte in Kombination verwendet werden.

Das die Drehzahl des Rades repräsentierende Signal wird vorteilhaft mit verbesserter Genauigkeit entsprechend der Darstellung gemäß Ansprüchen 2 und 3 sowie zugehöriger Beschreibung in der Beschreibungseinleitung gewonnen.

Es wird dabei jeweils ein ungefilterter Wert ermittelt und ein Wert, der einer Tiefpaßfilterung unterzogen wurde. Dabei handelt es sich vorteilhaft um ein Tiefpaßfilter 1. Ordnung.

Weiterhin wird in diesem Schritt 203 überprüft, ob der aktuell ermittelte gefilterte Referenzwert größer ist als der bisher ermittelte Maximalwert der gefilterten Referenzwerte. Wenn dies der Fall ist, wird der aktuell ermittelte gefilterte Referenzwert als Maximalwert der gefilterten Referenzwerte gespeichert.

Ebenso wird in diesem Schritt 203 überprüft, ob der aktuell ermittelte gefilterte Referenzwert kleiner ist als der bisher ermittelte Minimalwert der gefilterten Referenzwerte. Wenn dies der Fall ist, wird der aktuell ermittelte gefilterte Referenzwert als Minimalwert der gefilterten Referenzwerte gespeichert.

In diesem Schritt 203 wird aus dem ungefilterten Referenzwert fortlaufend der Mittelwert der ungefilterten Referenzwerte sowie das dazu gehörende Gütemaß ermittelt.

Es erfolgt dann ein Übergang zu dem Schritt 204, in dem überprüft wird, ob bereits eine weitere vorgegebene Zahl von Referenzwerten ermittelt wurde, d. h. ob ein vollständiges Sample von Referenzwerten aufgenommen wurde.

Ist dies nicht der Fall, wird der aktuelle Durchlauf des Verfahrens beendet.

Ist dies der Fall, erfolgt ein Übergang zu dem Schritt 205, in dem überprüft wird, ob der Maximalwert der gefilterten Referenzwerte des aktuell aufgenommenen Samples um nicht mehr als einen vorgegebenen Betrag von dem Maximalwert der gefilterten Referenzwerte des zuletzt gespeicherten Samples abweicht. Weiterhin wird in diesem Schritt 205 überprüft, ob der Minimalwert der gefilterten Referenzwerte des aktuell aufgenommenen Samples um nicht mehr als einen vorgegebenen Betrag von dem Minimalwert der gefilterten Referenzwerte des zuletzt gespeicherten Samples abweicht.

Ist dies der Fall, erfolgt ein Übergang zu dem Schritt 206. In diesem Schritt 206 wird überprüft, ob der Mittelwert der ungefilterten Referenzwerte des aktuellen Samples um nicht mehr als einen bestimmten Betrag von dem Mittelwert der ungefilterten Referenzwerte des zuletzt gespeicherten Samples abweicht. Weiterhin wird in diesem Schritt 206 überprüft, ob der Mittelwert der ungefilterten Referenzwerte des aktuellen Samples zuzüglich sowie abzüglich eines Mehrfachen des Gütemaßes innerhalb der durch den oberen Grenzwert und den unteren Grenzwert gegebenen Schranken liegt. Dieses Mehrfache kann dabei beispielsweise das Vierfache betragen.

Wird auch diese Überprüfung erfolgreich beendet, wird in dem Schritt 207 ein oberer Grenzwert festgelegt, indem zu dem Maximalwert der gefilterten Referenzwerte des aktuellen Samples ein Offsetwert addiert wird. Ein unterer Grenzwert wird festgelegt, indem von dem Minimalwert der gefilterten Referenzwerte des aktuellen Samples ein Offsetwert subtrahiert wird.

Bei künftigen Überprüfungen auf Druckverluste wird dann überprüft, ob der Referenzwert zwischen dem unteren Grenzwert und dem oberen Grenzwert liegt, die also die Vergleichswerte bilden.

Ergab eine der Überprüfungen in dem Schritt 205 oder 206, daß die Abweichungen der Werte bei dem aktuellen Sample zu groß waren, erfolgt ein Übergang zu dem Schritt 208, in dem die entsprechenden Werte des aktuellen Samples (Mittelwert, Gütemaß der ungefilterten Referenzwerte, Maximalwert und Minimalwert der gefilterten Referenzwerte des aktuellen Samples) zum Vergleich mit künftig aufgenommenen Samples abgespeichert werden.

Das in Figur 2 dargestellte Verfahren wird vorteilhaft dort eingesetzt, wo das Verfahren nach Figur 1 nicht zum Erfolg führt. Mit dem Verfahren nach Figur 2 wird dann überprüft, ob die Abweichungen der Referenzwerte, die eine Festlegung von Vergleichswerten nach dem Verfahren nach Figur 1 verhindern, insofern stabil sind, als daß eine Festlegung von Vergleichswerten nach dem Verfahren nach Figur 2 erfolgen kann.

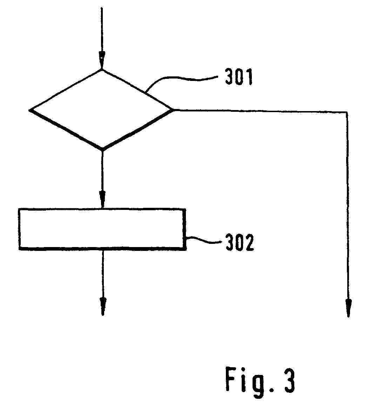

Figur 3 zeigt die Überprüfung der Rücksetzung der entsprechenden Werte. Dies soll beispielsweise dann erfolgen, wenn das Rad gewechselt wurde oder Luft nachgefüllt wurde. Dies kann mit entsprechenden Schaltern oder Sensoren überwacht werden. Ebenso ist es möglich, einen manuell zu betätigenden Resetschalter vorzusehen.

Ergibt die Überprüfung in dem Schritt 301, daß ein Reset erfolgen soll, so erfolgt ein Übergang zu dem Schritt 302, in dem der Reset durchgeführt wird. Dabei werden alle gespeicherten Werte (oberer und unterer Grenzwert, Vergleichswert, Gütemaß, Maximalwert und Minimalwert) auf 0 gesetzt.

**Patentansprüche**

1. Verfahren zur Erkennung von Druckverlusten in Fahrzeugreifen, bei dem aus Signalen, die die Raddrehzahlen mehrerer Fahrzeugräder repräsentieren, ein Referenzwert (Ref1, Ref2, Ref3) gebildet wird, wobei aus einem Vergleich eines aktuell bestimmten Referenzwertes mit wenigstens einem Vergleichswert auf einen Druckverlust geschlossen wird, wenn der aktuell bestimmte Referenzwert den Vergleichswert über- bzw. unterschreitet, wobei die Erkennung von Druckverlusten in Fahrzeugreifen unter Verwendung wenigstens eines Referenzwertes erfolgt, der gebildet wird, indem die Summen jeweils zweier die Raddrehzahlen repräsentierender Signale ($T_i$) dividiert werden (103, 203), und wobei die Zeitmessung für die einzelnen Räder nach einem gemeinsamen Startsignal individuell mit der jeweils folgenden Flanke des Sensor-Signals des betreffenden Rades gestartet und individuell für jedes Rad nach Ablauf der für alle Räder vorgegebenen Anzahl von Radumdrehungen abgeschlossen wird, **dadurch gekennzeichnet, daß**

- das die Raddrehzahlen repräsentierende Signal ($T_i$) aus der Zeit für eine vorgegebene Anzahl von ganzzahligen oder nicht ganzzahligen Radumdrehungen gewonnen wird,
- ein Mittelwert aus den Referenzwerten gebildet wird,
- der wenigstens eine Vergleichswert vorge geben wird, indem zu dem Mittelwert der Referenzwerte (Ref1, Ref2, Ref3) ein Offset addiert bzw. subtrahiert wird (106), wenn ein Gütemaß der Streuung der Referenzwerte (Ref1, Ref2, Ref3) einen ersten bestimmten Wert nicht überschreitet und/oder wenn der ermittelte Maximal- und Minimalwert der Referenzwerte um nicht mehr als einen zweiten bestimmten Wert von dem Mittelwert der Referenzwerte abweicht (104, 105).

2. Verfahren nach Anspruch 1, **dadurch gekennzeichnet, daß** die Anzahl der Radumdrehungen in Abhängigkeit von der Fahrzeuggeschwindigkeit vorgegeben wird.

3. Verfahren nach Anspruche 1 oder 2, **dadurch gekennzeichnet, daß** ein erster Satz von Referenzwerten und ein zweiter Satz von Referenzwerten gebildet werden, wobei Vergleichswerte in Abhängigkeit von dem Maximalwert und dem Minimalwert der Referenzwerte gebildet werden (207), wenn bei den beiden Sätzen von Referenzwerten die Maximalwerte der Referenzwerte, die Minimalwerte der Referenzwerte und das jeweilige arithmetische Mittel der Referenzwerte der beiden Sätze um nicht mehr als jeweils vorgegebene bestimmte Beträge voneinander abweichen und wenn das Gütemaß der Streuung den ersten bestimmten Wert nicht überschreitet (205).

4. Verfahren nach einem oder mehreren der Ansprüche 1 bis 3, **dadurch gekennzeichnet, daß** die Vergleichswerte achsenabhängig festgelegt werden.

5. Verfahren nach Anspruch 1, **dadurch gekennzeichnet, daß** die Vergleichswerte geschwindigkeitsabhängig festgelegt werden.

6. Verfahren nach einem oder mehreren der Ansprüche 1 bis 4, **dadurch gekennzeichnet, daß** bei einer Unterbrechung der Fahrt die ermittelten Werte gespeichert werden und nach Wiederantritt der Fahrt wieder ausgelesen werden.

7. Verfahren nach einem oder mehreren der Ansprüche 1 bis 6, **dadurch gekennzeichnet, daß** bei einem Radwechsel eine Resettaste betätigt wird (301).

8. Verfahren nach einem oder mehreren der Ansprüche 1 bis 7, **dadurch gekennzeichnet, daß** eine manuell betätigbare Resettaste vorgesehen ist (301).

9. Verfahren nach einem oder mehreren der Ansprüche 1 bis 8, **dadurch gekennzeichnet, daß** die Bildung der Referenzwerte unterbrochen wird, wenn bestimmte Schwellwerte der Längsbeschleunigung, Querbeschleunigung und/oder Radbeschleunigung überschritten werden (102, 202).

10. Verfahren nach einem oder mehreren der Ansprüche 1 bis 9, **dadurch gekennzeichnet, daß** die Bildung der Referenzwerte unterbrochen wird, wenn ein Bremseneingriff erfolgt (102, 202).

**Claims**

1. Method of detecting pressure loss in vehicle tires, wherein a reference value (Ref1, Ref2, Ref3) is produced from signals representative of the wheel rotational speeds of a plurality of vehicle wheels, wherein pressure loss is concluded from a comparison of a currently determined reference value with at least one comparative value when the currently determined reference value exceeds or falls below the comparative value, wherein pressure loss in vehicle tires is detected by using at least one reference value that is produced by dividing the sums of respectively two signals ($T_i$) representative of the wheel rotational speeds (102, 203), and wherein the time measurement for the individual wheels, after a joint start signal, is started individually with the respectively following edge of the sensor signal of the respective wheel and concluded individually for each wheel upon termination of the number of wheel revolutions predetermined for all wheels, **characterized in that**

- the signal ($T_i$) representative of the wheel rotational speeds is obtained from the time for a predetermined number of integral or non-integral wheel revolutions,
- a mean value of the reference values is produced,
- the at least one comparative value is predetermined by adding an offset to the mean value of the reference values (Ref1, Ref2, Ref3), or subtracting an offset therefrom, (106) when a quality gauge of the scattering of the reference values (Ref1, Ref2, Ref3) does not exceed a first defined value and/or when the established maximum and minimum values of the reference values differ by not more than a second defined value from the mean value of the reference values (104, 105).

2. Method as claimed in claim 1, **characterized in that** the number of the wheel revolutions is predetermined as a function of the vehicle speed.

3. Method as claimed in claim 1 or claim 2, **characterized in that** a first set of reference values and a second set of reference values is produced, and comparative values are produced as a function of the maximum value and the minimum value of the reference values (207) when in both sets of reference values the maximum values of the reference values, the minimum values of the reference values and the respective arithmetical mean of the reference values of the two sets differ from each other by not more than respectively predetermined defined amounts and the quality gauge of scattering does not exceed the first defined value (205).

4. Method as claimed in any one or more of claims 1 to 3, **characterized in that** the comparative values are determined in dependence on axles.

5. Method as claimed in claim 1, **characterized in that** the comparative values are determined speed-responsively.

6. Method as claimed in any one or more of claims 1 to 4, **characterized in that** when driving is interrupted, the values established are memorized and read out again after restart of driving.

7. Method as claimed in any one or more of claims 1 to 6, **characterized in that** a reset key is actuated when a wheel is changed (301).

8. Method as claimed in any one or more of claims 1 to 7, **characterized in that** a manually operable reset key is provided (301).

9. Method as claimed in any one or more of claims 1 to 8, **characterized in that** the production of the reference values is interrupted when defined threshold values of the longitudinal acceleration, transverse acceleration and/or wheel acceleration are exceeded (102, 202).

10. Method as claimed in any one or more of claims 1 to 9, **characterized in that** the production of the reference values is interrupted as soon as braking intervention is performed (102, 202).

## Revendications

1. Procédé de détection de pertes de pression dans des pneus de véhicule, dans lequel une valeur de référence (Ref1, Ref2, Ref3) est formée à partir de signaux qui représentent les vitesses de rotation de plusieurs roues du véhicule, et à partir d'une comparaison entre une valeur de référence déterminée à l'instant et au moins une valeur comparative, on conclut à une perte de pression lorsque la valeur de référence déterminée à l'instant est supérieure ou inférieure à la valeur comparative, et la détection de pertes de pression dans des pneus de véhicule s'effectue par utilisation d'au moins une valeur de référence qui est formée par division (103, 203) des sommes de deux signaux ($T_i$) représentant les vitesses de rotation des roues, et la mesure du temps pour les différentes roues est lancée individuellement, après un signal de démarrage commun, avec le flanc suivant du signal de capteur de la roue concernée, et est terminée individuellement pour chaque roue à l'expiration du nombre de rotations des roues prédéfini pour toutes les roues, **caractérisé en ce que**

   - le signal ($T_i$) représentant les vitesses de rotation des roues, est obtenu à partir de la durée d'un nombre prédéfini de rotations entières ou non entières des roues,

   - une valeur moyenne est formée à partir des valeurs de référence,

   - la ou les valeurs comparatives sont prédéfinies, **en ce qu'**une valeur offset est additionnée à la valeur moyenne des valeurs de référence (Ref1, Ref2, Ref3) ou soustraite de celle-ci (106), lorsqu'un critère de qualité de la dispersion des valeurs de référence (Ref1, Ref2, Ref3) ne dépasse pas une première valeur déterminée et/ou si la valeur maximale et la valeur minimale déterminée des valeurs de référence ne s'écartent pas de plus d'une deuxième valeur déterminée, par rapport à la valeur moyenne des valeurs de référence (104, 105).

2. Procédé selon la revendication 1, **caractérisé en ce que** le nombre de rotations des roues est prédéfini en fonction de la vitesse du véhicule.

3. Procédé selon les revendications 1 ou 2, **caractérisé en ce qu'**il est formé un premier jeu de valeurs de référence et un deuxième jeu de valeurs de référence, des valeurs comparatives étant formées (207) en fonction de la valeur maximale et de la valeur minimale des valeurs de référence, lorsque pour les deux jeux de valeurs de référence, les valeurs maximales des valeurs de référence, les valeurs minimales des valeurs de référence et la moyenne arithmétique respective des valeurs de référence des deux jeux ne s'écartent pas les unes des autres de plus des valeurs absolues déterminées prédéfinies dans chaque cas, et lorsque le critère de qualité de la dispersion ne dépasse pas la première valeur déterminée (205).

4. Procédé selon l'une ou plusieurs des revendications 1 à 3, **caractérisé en ce que** les valeurs comparatives sont fixées en fonction de l'essieu.

5. Procédé selon la revendication 1, **caractérisé en ce que** les valeurs comparatives sont fixées en fonction de la vitesse.

6. Procédé selon une ou plusieurs des revendications 1 à 4, **caractérisé en ce que** dans le cas d'une interruption de la marche, les valeurs déterminées sont mémorisées et après reprise de la marche elles sont à nouveau extraites.

7. Procédé selon une ou plusieurs des revendications 1 à 6, **caractérisé en ce que** dans le cas d'un changement de roue une touche de remise à zéro est actionnée (301).

8. Procédé selon une ou plusieurs des revendications 1 à 7, **caractérisé en ce qu'**il est prévu une touche de remise à zéro à actionnement manuel (301).

9. Procédé selon une ou plusieurs des revendications 1 à 8, **caractérisé en ce que** la formation des valeurs de référence est interrompue lorsque des valeurs seuil déterminées de l'accélération longitudinale, de l'accélération transversale et/ou de l'accélération des roues sont dépassées (102, 202).

10. Procédé selon une ou plusieurs des revendications 1 à 9, **caractérisé en ce que** la formation des valeurs de référence est interrompue lorsque se produit une intervention de freinage (102, 202).

Fig. 1

Fig. 2

301

302

Fig. 3